# EUROPEAN PATENT APPLICATION

(11) **EP 3 184 581 A1**
(43) Date of publication of application: **28.06.2017**
(21) Application number: 16206831.6
(22) Date of filing: 23.12.2016
(51) Int. Cl.: C08J 5/18, B32B 7/12, B32B 3/30, E01C 11/24, E04F 15/02, B29C 59/00, E01C 5/22

(54) **TEXTURE MATERIAL AND SURFACE ON WHICH THE TEXTURE MATERIAL ACCORDING TO THE INVENTION IS APPLIED**

(30) Priority: 23.12.2015 NL 2016027; 18.04.2016 NL 2016627
(71) Applicant: Climate Invest B.V., St. Julian's STJ 3155 (MT)
(72) Inventor: VAN MERKSTEIJN, Jacobus Lambertus, 3920 Zermatt (CH)
(74) Representative: Slikker, Wilhelmina Johanna

(57) **Abstract**

The present invention relates to a texture material, comprising a substantially sheet shaped material having a first surface and a second surface extending parallel thereto, wherein the first surface is provided with a plurality of texture elements extending therefrom, characterized in that the first surface comprises a plurality of channels.

The invention also relates to a basis or surface, on which a texture material according to the invention is applied, wherein the second surface of the texture material is directed towards the basis or surface.

## Description

The present invention relates to a texture material, said texture material comprising a substantially sheet shaped material having a first surface and a second surface extending parallel thereto, wherein the first surface is provided with a plurality of texture elements extending therefrom.

Such a texture material is known per se. The texture material may, for example, be used as an anti slip material, wherein the texture material is applied on a basis or surface, such as a floor or the like, with the second surface thereof. As a result of the first surface being provided with texture elements that extend therefrom, i.e. project or protrude therefrom, the material is relatively rough, such that the risk of slipping for a person who stands or moves on the texture material is reduced relative to a smooth surface.

It is an object of the invention to improve the per se known texture material.

This object is achieved according to the invention with a texture material of the type described in the preamble, wherein in accordance with the invention said first surface comprises a plurality of channels.

The channels may, for example, serve for the discharge of moisture or liquid that is present on the texture material. As a result thereof, in the case the texture material is used as an anti slip material, the risk of slipping for a person who stands or moves on the texture material is further reduced. In particular, when a person stands or moves on the texture material, the pressure of the person acting on the texture material will squeeze the moisture or liquid away from under said person via said channels, thereby reducing the risk on slipping.

The texture material according to the invention used as an anti slip material may advantageously be applied in wet areas, such as in a bathroom or in or around swimming pools, as well as for example in shops, offices and other areas where people may take in water in certain weather conditions such as rain, or where the floors are wet after mopping the floors.

Another advantage of the texture material according to the invention may be that stains, such as, for example, fingerprints, and smudges can be less visible than can be the case for smooth surfaces. This allows the texture material according to the invention to be advantageously applied in situations where such stains may occur with the result that stains that are present are not or hardly visible. A possible application of the texture material may, for example, be as a wall covering, lining or coating, in which application the texture material is applied on a wall with the second surface thereof.

Yet another advantage of the texture material according to the invention may be that the material may be easy to clean in spite of its roughness. This may for example be advantageous when the texture material is used as, for example, a table cloth or as a furniture lining, such as, for example, cabinet lining.

Yet again alternatively, the texture material may be used as a material to be printed, i.e. as a printing medium. As a result of the texture, less material is in contact with elements moving along or on the surface of the printer during printing of the material, such that relatively less contamination of the printing medium will occur.

In particular, as is clear from the above, the texture material may be any of an anti slip material, more in particular an anti slip foil, a table cloth, a covering, lining or coating material for a wall, a lining material for a piece of furniture, or a printing medium.

It is clear that the texture material may be applied in any desired manner. This is not limited to the examples mentioned above.

It is noted that, because the texture elements extend or protrude from the first surface, they may also be considered as protrusions or projections.

It is noted that the texture elements and channels are separate objects or elements respectively extending from or arranged in the first surface of the texture material. In particular, the texture elements do not define or form the channels there between.

In an embodiment of the texture material according to the invention, the channels are arranged in said first surface in a recessed manner relative to the first surface.

It is clear that in this embodiment the texture elements protrude from the first surface and the channels are recessed in the first surface. The first surface hereby extends at a certain level, wherein the channels extend at a recessed or lower level relative to said certain level, and wherein the texture elements extend at a raised level relative to said certain level. Recessed is thus to be understood in a direction towards the second surface, and raised in a direction away from the second surface.

In another embodiment of the texture material according to the invention the channels form a pattern of interconnected channels.

An advantage of this embodiment is that the channels may be well spread over the first surface and as a result of the interconnection the channels may be able to effectively discharge the moisture or liquid.

It is noted that, as desired, all or not all channels may be interconnected. It could, for example, be foreseen that a group of mutually connected channels may be provided that are not connected to another group of mutually connected channels. If all channels are mutually connected one could also speak of one channel instead of multiple channels, which one channel is arranged in or over the first surface with a desired or chosen pattern.

It is further noted that interconnected or mutually connected is to be understood here as the channels being in a liquid through flow connection with each other.

It Is further noted that said pattern of channels may be any desired, in particular regular or non-regular, pattern.

In particular, the pattern may be arranged over the first surface of the texture material in a uniformly distributed manner.

The pattern may, for example, comprise a plurality of interconnected polygons, in particular, regular polygons.

As a result of such polygons, an evenly distributed pattern of channels may be arranged over the first surface.

Practically, the polygon may be selected from a triangle, a rectangle, a pentagon or a hexagon.

The applicant has found that, in particular, a triangle provides the advantage of the texture material having a relatively large number of channels per unit of surface area, for example expressed in channel length per square meter (m/m²). As a result thereof, the anti slip value of the texture material is relatively high. In particular, it has been found by the applicant that such a texture material may possess an anti slip value (R-value) of R11. For example, a hexagon may also provide a relatively high R-value to the texture material, for example RIO V4.

The sheet shaped material may, for example, be a foil.

The sheet shaped material may, for example, be manufactured from a plastic material.

The plastic may hereby be selected from the group comprising polyvinyl chloride (PVC), polypropylene (PP) and polyethylene (PE).

In another embodiment of the texture material according to the invention an adhesive layer is arranged on the second surface.

With the aid of the adhesive layer the texture material may be attached to a basis or surface, for example a floor, a wall, or a piece of furniture or panel thereof, with the second surface of the texture material.

The texture elements or protrusions may be designed in any desired manner. For example, but not limited thereto, the protrusions may be shaped as studs, bumps, spheres, (truncated) pyramids, cubes, beams. It is also possible that the texture elements have an irregular shape, such as, for example, shard-shaped. The texture elements may all have the same shape and/or size, or they may have mutually different shapes and/or sizes.

The texture elements may be applied over the first surface in an evenly distributed manner or not. It may also be possible that certain parts of the first surface have a higher density of texture elements than other parts.

The invention also relates to a basis or surface, on which a texture material with one or more of the above described features is provided, wherein the second surface of the texture material is directed towards the substrate.

The texture material may, for example, be fixedly arranged on the basis or surface, optionally with the adhesive layer thereof when a texture material with an adhesive layer on the second surface thereof is used.

The basis or surface may be any desired basis or surface, such as, for example, but not limited thereto, a floor, a wall, or a furniture panel.

The invention will be explained in more detail with reference to figures illustrated in a drawing, in which:
Figure 1 shows a schematic, perspective top view of the texture material according to a first embodiment of the invention;
Figure 2 shows a detail of the texture material of Figure 1;
Figure 3 shows a schematic top view of the texture material according to a second embodiment of the invention, and
Figure 4 shows a detail of the texture material of Figure 3.

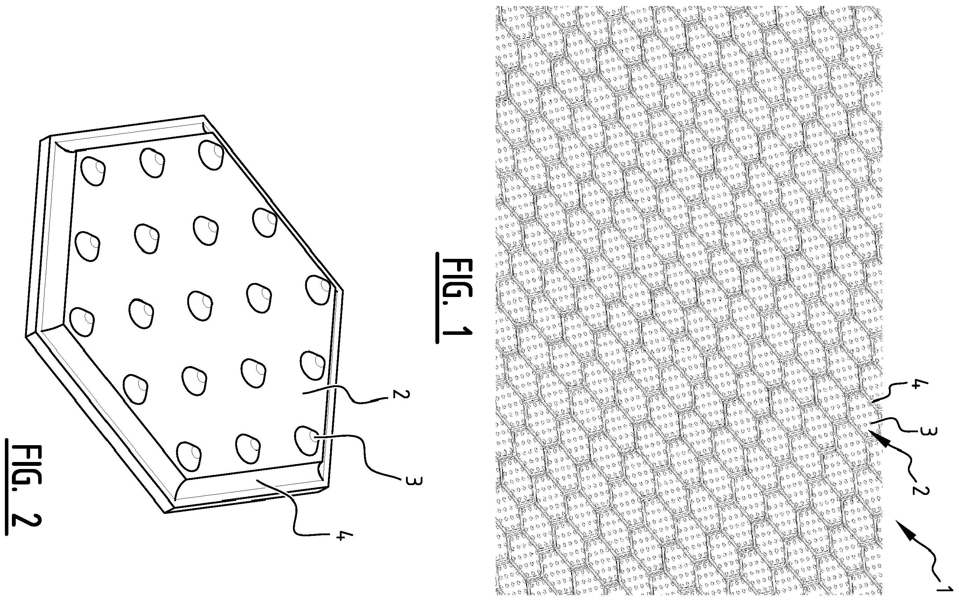

Figures 1 and 2 show a texture material 1, in particular a first surface 2 thereof. In this embodiment, the texture material 1 is a plastic foil. The first surface 2 of the texture material is provided with texture elements 3 that extend or protrude therefrom and are evenly distributed over the first surface 2. In this example, the elements 3 are a kind of bumbs or studs extending therefrom.

A pattern of, in this example, hexagonally arranged interconnected channels 4 is evenly distributed over the first surface 2 of the texture material 1 and arranged therein. The channels 4, for example, serve for the discharge of moisture or liquid, for example in particular under the influence of a person acting a pressure on the upper surface 2, or during cleaning of the texture material 1. Figure 2 shows a detail of the texture material 1 of figure 1, namely, a single hexagon of interconnected channels 4. As visible in figure 2, the channels 4 are recessed in the first surface 2. As is further clear from figure 2, the channels 4 are not defined by the texture elements 3, but are separate elements provided in the first surface.

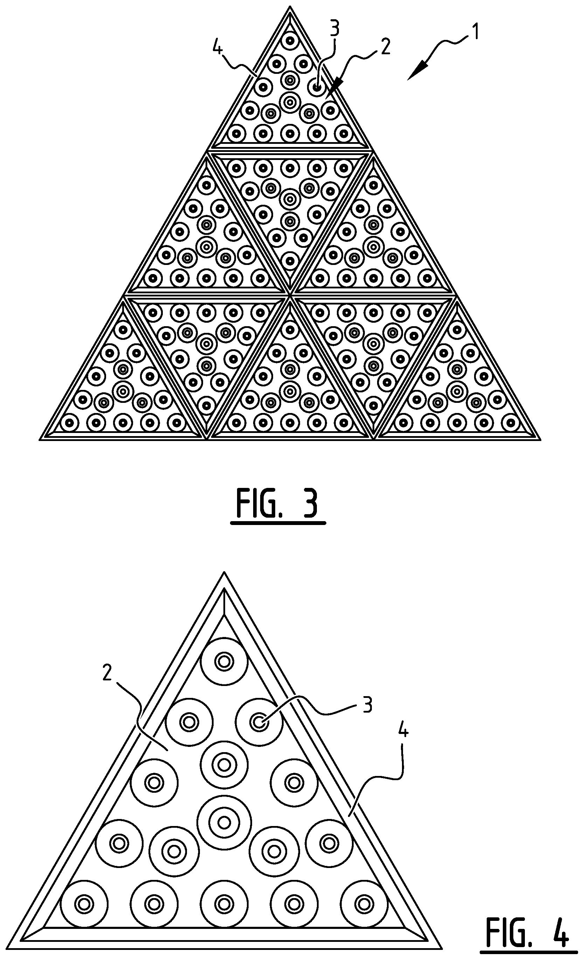

Figures 3 and 4 show a texture material 1 according to a second embodiment of the invention. Only the differences with the texture material of Figures 1 and 2 will be described. For a further description of the texture material 1 according to the second embodiment reference is made to the above explanation associated with Figures 1 and 2. Similar elements are referred to with similar reference numerals.

The texture material 1 of Figures 3 and 4 differs from the texture material 1 of Figures 1 and 2 in that the channels 4 are arranged according to a triangular pattern.

It is noted that the invention is not limited to the exemplary embodiments discussed above, but also extends to other variants falling within the scope of the appended claims.

For example, the elements 3 do not need to be bump or stud shaped, but may have any regular or irregular shape.

The channels 4 do not need to be arranged as interconnected hexagons or triangles, but may be arranged in any desired manner.

## Claims

1. Texture material, comprising a substantially sheet shaped material having a first surface and a second surface extending parallel thereto, wherein the first surface is provided with a plurality of texture elements extending therefrom, **characterized in that** the first surface comprises a plurality of channels.

2. Texture material according to claim 1, wherein the channels are arranged in said first surface in a recessed manner relative to the first surface.

3. Texture material according to claim 1 or 2, wherein the channels form a pattern of interconnected channels.

4. Texture material according to claim 4, wherein the pattern comprises a plurality of interconnected polygons, in particular regular polygons.

5. Texture material according to claim 5, wherein the polygon is selected from a triangle, a rectangle, a pentagon or a hexagon.

6. Texture material according to any of the preceding claims, wherein the sheet shaped material is a foil.

7. Texture material according to any of the preceding claims, wherein the sheet shaped material is made of a plastic material.

8. Texture material according to claim 7, wherein the plastic is selected from the group comprising polyvinyl chloride (PVC), polypropylene (PP) and polyethylene (PE).

9. Texture material according to any of the preceding claims, wherein an adhesive layer is provided on the second surface.

10. Basis or surface, on which a texture material according to any of claims 1 - 9 is applied, wherein the second surface of the texture material is directed towards the basis or surface.
